(19) Europäisches Patentamt
European Patent Office
Office européen des brevets

(11) **EP 3 627 448 A1**

(12) **EUROPEAN PATENT APPLICATION**

(43) Date of publication:
**25.03.2020 Bulletin 2020/13**

(51) Int Cl.:
***G06T 7/80*** *(2017.01)*     ***G06T 7/11*** *(2017.01)*

(21) Application number: **18196218.4**

(22) Date of filing: **24.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Veoneer Sweden AB**
**447 83 Vårgårda (SE)**

(72) Inventor: **LINDGREN, Leif**
**58336 Linköping (SE)**

(74) Representative: **Müller Verweyen**
**Patentanwälte**
**Friedensallee 290**
**22763 Hamburg (DE)**

(54) **VISION SYSTEM AND METHOD FOR A MOTOR VEHICLE**

(57)     A vision system (10) for a motor vehicle comprises a stereo imaging apparatus (11) with imaging devices (12) adapted to capture images from a surrounding of the motor vehicle, and a processing device (14) adapted to process images captured by said imaging devices (12) and to detect objects, and track detected objects over several time frames, in the captured images. The processing device (14) is adapted to obtain an estimated value for the intrinsic yaw error of the imaging devices (12) by solving a set of equations, belonging to one particular detected object (30), using a non-linear equation solver method, where each equation corresponds to one time frame and relates a frame time, a disparity value of the particular detected object, an intrinsic yaw error and a kinematic variable of the ego vehicle. The processing device (14) is adapted to determine whether a detected object is stationary or near-stationary, and to discard in said yaw error estimation a detected object not being stationary or near-stationary. The processing device (14) is adapted to use additional information to discriminate tracked objects that are moving so those moving objects are not used for estimating the yaw angle error.

Fig. 2

**Description**

The invention relates to a vision system for a motor vehicle according to the preamble of claim 1. The invention also relates to a corresponding vision method.

The yaw angle, also known as squint angle, between the left camera and the right camera in a stereo camera system, must be determined with great accuracy, because an error in this angle results in large distance estimation errors in the stereo calculations. The distance error grows with the square of the distance. For an automotive stereo camera the squint angle will not be constant over the vehicle life time due to thermal changes and the long life time of automotive systems. Therefore, an online solution for estimating a squint angle error is needed.

It is known to estimate the squint angle error using radar or lidar distance information as a reference value, which however requires a radar or lidar reference system.

A vision system according to the preamble of claim 1 overcoming the above problem is known from EP 3 252 712 A1. Here, the yaw or squint angle is essentially estimated by comparing the vehicle speed with the disparity measured on tracked stationary objects. It is disclosed to determine whether a detected object is stationary or near-stationary, and to discard in the yaw error estimation a detected object not being stationary or near-stationary. This is done by determining the speed of a detected object and discarding the object in case it has non-zero speed, or a speed exceeding a predetermined threshold. The speed of a detected object is estimated by a tracker in said processing device adapted to track detected objects or object candidates over time. However, a challenge with this approach is that it is sometimes difficult to know if the object that is being tracked and used for the calculation is actually stationary or if it is moving. If the object is in fact moving, then the estimated squint angle will not be correct.

The object of the present invention is to provide an improved vision system and a method of controlling a vision system which further enhances the reliability and precision in the determination of a yaw angle error between the stereo cameras during operation of a motor vehicle.

The invention solves this object with the features of the independent claims. According to the invention, additional information is used to discriminate tracked objects that are moving so those moving objects are not used for estimating the yaw angle error. This allows to detect more reliably than in the prior art whether a detected object is stationary or near-stationary, and thus to improve the determination of the yaw angle error by discarding in the yaw error estimation a detected object not being stationary or near-stationary.

Preferably, the additional information includes lane information of the road the vehicle is moving on. This is based on the consideration that objects which are on the road, or on the road lanes, are often not stationary. Therefore, objects that are estimated by the vision system to be on the road, and/or on road lanes, can be discarded. This can be done either without further investigation, or in case further conditions confirming a non-stationary object are fulfilled.

In a preferred embodiment, the lane information is obtained from a lane detection algorithm (i.e., a vision algorithm) through image processing of images captured by the imaging apparatus. In this case, not additional devices are required for obtaining the lane information.

Alternatively or in addition, the lane information is preferably obtained from external data, in particular provided by an automotive satellite navigation system (GPS) or an automotive wireless receiver connecting to the Internet (in other words, from Cloud data).

Preferably, the additional information includes road information of the road the vehicle is moving on. This is based on the same consideration that objects which are on the road are often not stationary. Therefore, objects that are estimated by the vision system to be on the road can be discarded. This can be done either without further investigation, or if further conditions confirming a non-stationary object are fulfilled.

In a preferred embodiment, the road information is obtained from a road detection algorithm (i.e., a vision algorithm) through image processing of images captured by the imaging apparatus. In this case, not additional devices are required for obtaining the road information. Preferably, the road detection algorithm is adapted to estimate where the road is relative to the ego vehicle. This facilitates estimating whether or not detected objects are on the road.

Alternatively or in addition, the road information is preferably obtained from external data, in particular provided by an automotive satellite navigation system (GPS) or an automotive wireless receiver connecting to the Internet (in other words, from Cloud data).

Preferably the additional information includes landmark information regarding predefined visible landmarks objects in the environment of the motor vehicle. Such predefined landmark objects preferably comprise bridges, traffic signs including overhead signs, traffic lights, special buildings, toll booths and/or zebra crossings. The predefined landmark objects are known to be static. Therefore, landmark objects detected by the vision system in the environment of the motor vehicle are preferably used in the estimation of the yaw angle error.

Preferably, the landmark information is obtained from external data, in particular provided by an automotive satellite navigation system (GPS) or an automotive wireless receiver connecting to the Internet (in other words, from Cloud data).

According to the invention, a set of equations is solved by using a non-linear equation solver method in order to obtain an estimated value for the intrinsic yaw error. Each equation corresponds to one time frame and relates a time of the time frame, a calculated disparity value of the particular detected object, an intrinsic yaw error, and a kinematic variable of the ego vehicle, by using a non-linear equation solver method in order to obtain an estimated value for the intrinsic yaw error. It has been found out that in this manner, the yaw angle error between the stereo cameras can be accurately determined during movement of the motor vehicle, allowing for a corresponding yaw angle calibration of the stereo cameras.

The estimated value for the intrinsic yaw error can advantageously be used for calibrating the yaw angle between the imaging devices during driving.

Preferably, all equations in the set have the same form. In particular, all equations in the set are preferably obtained by equalizing the current distance to the particular detected object as obtained from vehicle kinematics, to the current distance as obtained from the disparity value. Herein, the current distance as obtained from the disparity value may be expressed as $x = f \cdot b / (d + \varepsilon)$, where f is the focal length of the imaging devices in the baseline direction, b is the baseline, i.e. the distance between the imaging devices, d is the current disparity value, and $\varepsilon$ is the intrinsic yaw error. In many cases, the baseline direction is horizontal. However, the baseline direction may also have a significant vertical component, for example if the stereo imaging devices are located far away from each other, like in the front bumper and behind the wind screen of the vehicle. In such cases, the baseline and focal length direction are measured in the non-horizontal direction between the imaging devices.

In the ideal case, where $\varepsilon=0$, the above equation gives the well-known relation between the distance x and the disparity d of a detected object. In the real case, where $\varepsilon\neq0$, the above equation is used with the additional advantageous feature of expressing the yaw error $\varepsilon$ as a simple shift to the disparity value d. In other words, the calculated disparity d and the yaw error $\varepsilon$ are related to each other by addition or subtraction in the equation. In other words, the ideal disparity D is expressed by adding (or subtracting) the yaw error $\varepsilon$ to or from the calculated disparity d. This inventive approach is accurate because of the small angle approximation: the yaw angle $\varepsilon$ is very small, such that $\sin \varepsilon \approx \varepsilon$. An example of an unacceptable error $\varepsilon$ is 0.05 degrees.

In order to improve the accuracy in the yaw error estimation, the number of equations used in the set of equations is preferably larger than the unknown variables, preferably by a factor of at least 1.5, more preferably by a factor of at least 2, even more preferably by a factor of at least 3. Preferably the number of equations used in the set is at least three, preferably at least five, more preferably at least ten. Generally speaking, the higher the number of equations used, the higher the precision of the unknown variables determined.

Preferably, the set of equations is based on the assumption of an essentially constant ego vehicle speed v, simplifying the equations for the yaw error calculation and thus reducing the computational effort. In particular, the above mentioned current distance x to the particular detected object as obtained from vehicle kinematics can be simply expressed by the equation $x = (t0 - t) \cdot v$, where t0 is the (unknown) time when the particular detected object is at x = 0, i.e. on the straight line connecting the imaging devices, t is the frame time of the current time frame, such that t0 - t is the time to collision TTC, and the kinematic variable v is the ego vehicle speed, i.e. the longitudinal speed of the ego vehicle, generally relative to the particular detected object, or in case of a stationary detected object, is the absolute ego vehicle speed (relative to ground).

Summarizing the above, a practically preferred general form of equation to be used in the yaw error estimation is

$$(t0 - t) \cdot (d + \varepsilon) - f \cdot b / v = 0$$

As mentioned above, according to the invention the vision system is adapted to determine whether a detected object is stationary or near-stationary, and to discard a detected object which is not fulfilling this condition, i.e., which is moving. In addition to the approaches mentioned above, the speed of a detected object can be determined and a detected object can be discarded in case it has non-zero speed, or a speed exceeding a predetermined threshold. The speed of a detected object is preferably estimated by a tracker in said processing device adapted to track detected objects or object candidates over time. Other ways of determining the speed of a detected object are possible. Also, other ways of determining whether a detected object is stationary or near-stationary are possible, for example by using a classifier in the image processing of detected objects, and only taking account of classified objects which are known to be stationary, like poles, traffic signs, lamp posts, trees, zebra crossings, dashed lane markings etc.

In the case of a stationary detected object, the above mentioned condition of an essentially constant ego vehicle speed relative to the detected object reduces to an essentially constant absolute ego vehicle speed (relative to ground). Consequently, the vision system is preferably adapted to determine whether the ego vehicle speed is essentially constant, and to discard in said yaw error estimation image frames not fulfilling this condition. The condition of essentially constant ego vehicle speed can be easily evaluated for example by monitoring the ego vehicle speed available on a vehicle data bus, namely the ego vehicle speed measured by an angular velocity sensor arranged in a measuring relationship to a rotating part in the powertrain of the ego vehicle, like the crankshaft, which velocity is proportional to the wheel speed and is displayed by the cockpit speedometer. Other ways of evaluating the condition of an essentially constant ego vehicle speed are possible, for example by monitoring the more exact speed value provided by a satellite navigation system (GPS) receiver of the motor vehicle; or by evaluating the signal from a longitudinal acceleration sensor, which should be zero or near-zero.

As mentioned above, the kinematic variable may in particular be the longitudinal vehicle speed. However, the kinematic variable may also be for example the integrated longitudinal vehicle speed, or the longitudinal acceleration of the ego vehicle. In case of longitudinal vehicle speed, there are different ways of handling the speed variable in the set of equations. In a preferred embodiment, the speed variable v is regarded as known, i.e. the ego vehicle speed v provided by a speed sensor and/or a satellite navigation system receiver of the motor vehicle is inserted into the equations. This has the advantage that by reducing the number of unknown variables by one, the accuracy in the determination of the other unknown variables, including the yaw error, can be improved.

On the other hand, the speed variable v may be regarded as unknown, and the ego vehicle speed v can be derived by solving the set of equations by using the non-linear equation solver method, just in the same manner as deriving other unknowns such as the intrinsic yaw error. In this application, the invention delivers an ego vehicle speed value independent of the speed value related to the wheel speed and displayed by the cockpit speedometer, which may be used for calibrating the ego vehicle speed.

Preferably, the set of equations is based on the assumption of the ego vehicle essentially moves straight. This allows for simplification of the equations, and for using the vehicle speed as the longitudinal velocity in the equations, since the lateral speed component is zero or near zero. In this regard, the vision system preferably is adapted to monitor a condition of an essentially straight moving ego vehicle, and to discard image frames not fulfilling said condition. Herein, the condition of an essentially straight moving ego vehicle can be monitored on the basis of a signal from a yaw rate sensor and/or a steering wheel angle sensor of the motor vehicle.

In the following the invention shall be illustrated on the basis of preferred embodiments with reference to the accompanying drawings, wherein:

Fig. 1     shows a vision system for a motor vehicle according to an embodiment of the invention; and

Fig. 2     shows an image captured by the imaging apparatus in order to illustrate an aspect of the invention.

The vision system 10 is mounted in a motor vehicle and comprises an imaging apparatus 11 for acquiring images of a region surrounding the motor vehicle, for example a region in front of the motor vehicle. The imaging apparatus 11 comprises a plurality of optical imaging devices 12, in particular cameras, forming a stereo imaging apparatus 11 and operating in the visible and/or infrared wavelength range, where infrared covers near IR with wavelengths below 5 microns and/or far IR with wavelengths beyond 5 microns.

The imaging apparatus 11 is coupled to a data processing device 14 adapted to process the image data received from the imaging apparatus 11. The data processing device 14 may comprise a pre-processing section 13 adapted to control the capture of images by the imaging apparatus 11, receive the signal containing the image information from the imaging apparatus 11, rectify or warp pairs of left/right images into alignment and/or create disparity or depth images, which per se is known in the art. The image pre-processing section 13 may be realized by a dedicated hardware circuit, for example a Field Programmable Gate Array (FPGA) or an Application Specific Integrated Circuit (ASIC). Alternatively the pre-processing section 13, or part of its functions, can be realized by software in a microprocessor or in a System-On-Chip (SoC) device comprising, for example, FPGA, DSP, ARM and/or microprocessor functionality.

Further image and data processing carried out in the processing device 14 by corresponding software advantageously comprises identifying and preferably also classifying possible objects in front of the motor vehicle, such as pedestrians, other vehicles, bicyclists and/or large animals, by a classifier, tracking over time the position of object candidates identified in the captured images by a tracker, and activating or controlling at least one driver assistance device 18 depending on an estimation performed with respect to a tracked object, for example an estimated collision probability. The driver assistance device 18 may in particular comprise a display device to display information relating to a detected object. However, the invention is not limited to a display device. The driver assistance device 18 may in addition or alternatively comprise a warning device adapted to provide a collision warning to the driver by suitable optical, acoustical and/or haptic warning signals; one or more restraint systems such as occupant airbags or safety belt tensioners, pedestrian airbags, hood lifters and the like; and/or dynamic vehicle control systems such as brake or steering control devices.

The data processing device 14 is preferably a digital device which is programmed or programmable and preferably comprises a microprocessor, micro-controller, digital signal processor (DSP) or a System-On-Chip (SoC) device. The data processing device 14, pre-processing section 13 and the memory device 25 are preferably realised in an on-board electronic control unit (ECU) and may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image pre-processing, image processing to possible activation or control of driver assistance device 18 are performed automatically and continuously during driving in real time.

The processing device 14 has access to information obtained from other vehicle sensors 19, like velocity sensor 21, yaw rate sensor 22, steering wheel sensor 23, wireless satellite navigation receiver 24 (for example a GPS receiver), wireless receiver 25 connecting to the Internet etc. in the motor vehicle via a digital data bus 20, for example a CAN bus. The velocity sensor 21 may be an angular velocity sensor arranged in a measuring relationship to a rotating part in the powertrain of the ego vehicle, like the crankshaft or driveshaft, between the transmission and the wheels. The yaw rate sensor 22 may for example be an acceleration sensor measuring the lateral acceleration of the vehicle.

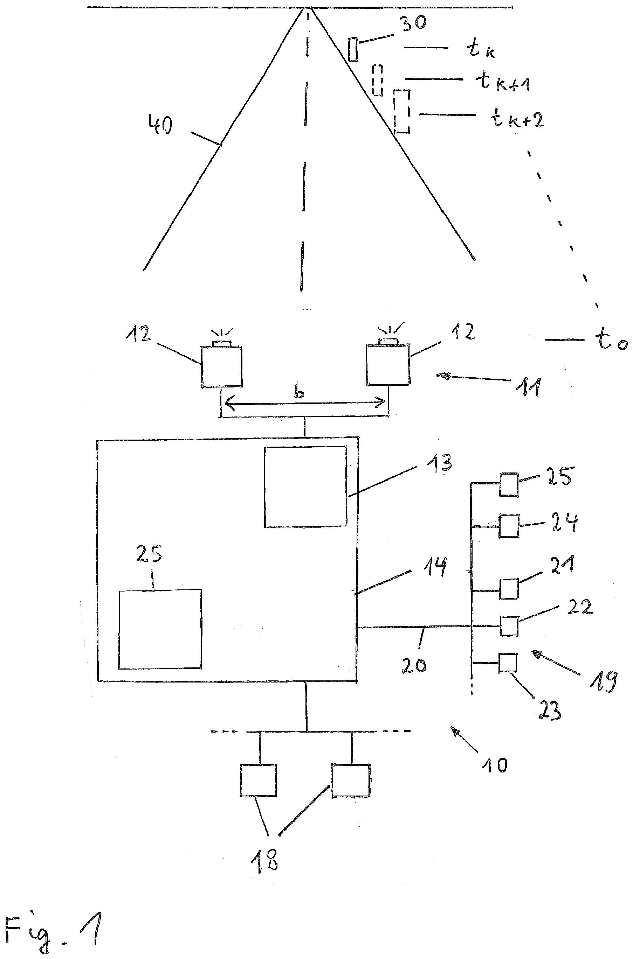

In the following, the invention is described by way of example as shown in Figure 1, namely through detecting and tracking a pole 30 in the images captured by the imaging system 11. The pole 30 is detected by an object detection section and tracked by a tracker in the image processing device 14. It may be assumed that the pole 30 is detected in time frame $t_k$ and found in subsequent in the images corresponding to subsequent time frames $t_{k+1}$, $t_{k+2}$, .... For each frame, the corresponding disparity dk, $d_{k+1}$, $d_{k+2}$, ... is calculated in the processing means 14 in the usual manner as the baseline distance in pixels between the detected object, here the pole 30, in the left and right stereo images.

The vision system permanently monitors the ego vehicle speed provided by the vehicle speed sensor 21. It shall be assumed that the vehicle moves with constant velocity on the road 40. Furthermore, the processing device 14 determines that the vehicle is moving straight on the road, based on the signal from the yaw rate sensor 22, or alternatively from the steering wheel sensor 23. Based on information from the tracker in the image processing section of the data processing device, the pole 30 is correctly estimated to be stationary. Since all conditions are met, therefore, the object 30 in the time frames $t_k$, $t_{k+1}$, $t_{k+2}$, ... is regarded admissible by the processing device 14. The processing device 14 then sets up the following set of equations for the pole 30:

$$(t0 - t_k) \cdot (d_k + \varepsilon) - f \cdot b / v = 0$$

$$(t0 - t_{k+1}) \cdot (d_{k+1} + \varepsilon) - f \cdot b / v = 0$$

$$(t0 - t_{k+2}) \cdot (d_{k+2} + \varepsilon) - f \cdot b / v = 0$$

etc., where it is understood that at least three equations is sufficient to estimate a value of the yaw angle error, and preferably more than three equations, for example at least ten equations, are used in order to achieve a sufficient accuracy in the yaw error estimation. It can be seen that all equations have the same form, and differ in the value of the frame time t and the disparity d, only.

In the above equations, the values for $t_k$, $t_{k+1}$, $t_{k+2}$, ... and the corresponding disparity values $d_k$, $d_{k+1}$, $d_{k+2}$, ... for the pole 30 are inserted, together with the known values for f, b and v. This gives a set of equations with two unknowns, namely the collision time to (where the pole is on a line connecting the camera devices 12) and the yaw error $\varepsilon$. The set of equations forms a non-linear least squares problem and may be easily solved for t0 and $\varepsilon$ using a non-linear equation solver method like the Gauss-Newton algorithm.

The yaw angle error $\varepsilon$ calculated from a single other object, here the pole 30, could be further filtered over time to improve the accuracy. Also a suited average of $\varepsilon$ values over a plurality of other objects could be formed.

The resulting value of $\varepsilon$ has been found to be a sufficiently accurate measure of the yaw angle error, which can be advantageously used in a yaw angle error calibration during driving of the motor vehicle.

Constant ego vehicle speed is not a strict requirement for realizing the invention. For example, an alternative to the equation x=(t0-t)·v used above would be the equation

$$x_i = \alpha \cdot \int_{ti}^{t0} v(t)dt$$

letting the ego vehicle speed v(t) be variable, where i is a frame index and $\alpha$ is a multiplicative error of the vehicle speed. The error of the vehicle speed can be regarded multiplicative as the speed can be expressed as wheel-radius = $\alpha \cdot$ wheel-radius (set) and v = $\alpha \cdot$ v (wheel-speed) . It may also be possible to set $\alpha$=1 in the above equation.

As mentioned above, the invention allows to estimate f · b / v. Therefore, if f and b are known, v and $\alpha$ can be

estimated. Also, if v, or an integrated v, i.e. $\int_{ti}^{t0} v(t)dt$, is known from other sources, like a satellite navigation receiver, f could be regarded unknown and thereby estimated online. On the other hand, if f is considered known, baseline b, which slightly varies over temperature, can be estimated.

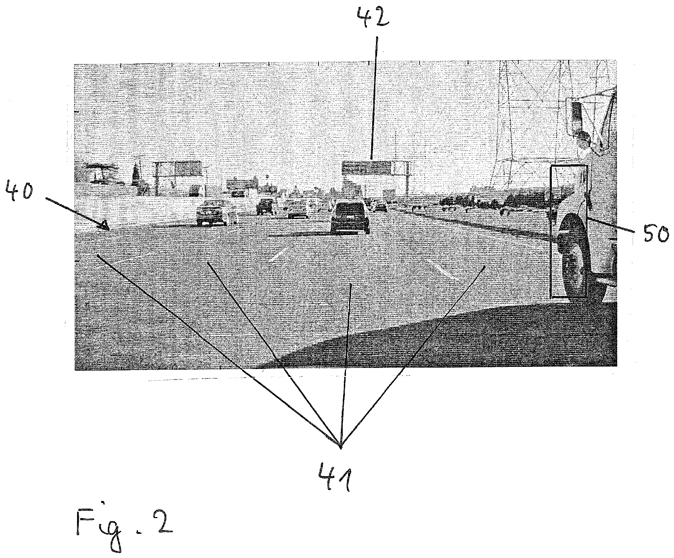

Figure 2 shows an exemplary image captured by the imaging apparatus 11 of the vision system 10 during driving. Here, it is possible that a part 50 of a moving truck is seen as a general object which cannot be classified as any type of vehicle or pedestrian. However, the part 50 being non-stationary is unsuited for estimating the yaw angle error according to the invention.

In order to rule out moving objects like the part 50, the processing means 14 is advantageously adapted to acquire lane and/or road information about the road 40 and/or the road lanes 41 of the road 40 on which the ego vehicle moves. The processing means 14 is adapted to determine whether a detected object, here the part 50, is positioned on the road 40 and/or on a lane 41 of the road 40. Here, since the part 50 is indeed determined to be the road 40 and/or on a lane 41 of the road, it is estimated to be non-stationary, and discarded in the estimation of the yaw angle error in the method described above.

The determination of the road 40 and/or of lanes 41 of the road 40 can be performed by the processing device 14 through image processing of images acquired by the imaging apparatus 11.

Alternatively or in addition, the road 40 and/or of lanes 41 of the road 40 can be determined through data from a wireless satellite navigation receiver 24 (for example a GPS receiver) and/or from Cloud data received by a wireless receiver 25 connecting to the Internet, see Figure 1.

Also shown in Figure 2 is an example of a stationary landmark 42, here an overhead traffic sign, which can advantageously be used for estimating of the yaw angle error in the method described above. Therefore, the processing device 14 is preferably adapted to detect stationary pre-determined landmark objects 42, which are visible by the imaging apparatus, in the environment of the motor vehicle. The landmark information is advantageously determined through data from a wireless satellite navigation receiver 24 (for example a GPS receiver) and/or from Cloud data received by a wireless receiver 25 connecting to the Internet, see Figure 1.

**Claims**

1. Vision system (10) for a motor vehicle, comprising a stereo imaging apparatus (11) with imaging devices (12) adapted to capture images from a surrounding of the motor vehicle, and a processing device (14) adapted to process images captured by said imaging devices (12) and to detect objects, and track detected objects over several time frames, in the captured images, wherein said processing device (14) is adapted to obtain an estimated value for the intrinsic yaw error of the imaging devices (12) by solving a set of equations, belonging to one particular detected object (30), using a non-linear equation solver method, where each equation corresponds to one time frame and relates a frame time, a disparity value of the particular detected object, an intrinsic yaw error and a kinematic variable of the ego vehicle, and wherein said processing device (14) is adapted to determine whether a detected object is stationary or near-stationary, and to discard in said yaw error estimation a detected object not being stationary or near-stationary, **characterized in that** said processing device (14) is adapted to use additional information to discriminate tracked objects that are moving so those moving objects are not used for estimating the yaw angle error.

2. Vision system as claimed in claim 1, **characterized in that** said additional information includes lane information of the road the vehicle is moving on.

3. Vision system as claimed in claim 2, **characterized in that** said lane information is obtained from a lane detection algorithm through image processing of images captured by said imaging apparatus (11).

4. Vision system as claimed in any one of the preceding claims, **characterized in that** said additional information includes road information of the road the vehicle is moving on.

5. Vision system as claimed in claim 4, **characterized in that** said road information is obtained from a road detection algorithm through image processing of images captured by said imaging apparatus (11).

6. Vision system as claimed in claim 5, **characterized in that** said road detection algorithm is adapted to estimate the position of the road relative to the ego vehicle.

7. Vision system as claimed in any one of claims 2 to 6, **characterized in that** detected objects that are estimated to be on the road, and/or on road lanes, are discarded in the estimation of the yaw angle error.

8. Vision system as claimed in any one of the preceding claims, **characterized in that** said additional information includes landmark information regarding predefined landmark objects in the environment of the motor vehicle.

9. Vision system as claimed in claim 8, **characterized in that** said landmark objects comprise one or more of bridges, traffic signs including overhead signs, traffic lights, special buildings, toll booths, zebra crossings.

10. Vision system as claimed in claim 8 or 9, **characterized in that** landmark objects detected by the vision system are used in the estimation of the yaw angle error.

11. Vision system as claimed in in any one of the preceding claims, **characterized in that** said additional information is obtained from external data, in particular provided by an automotive satellite navigation system or a wireless receiver connecting to the Internet.

12. Vision method for a motor vehicle, comprising capturing images from a surrounding of the motor vehicle using a stereo imaging apparatus (11) with stereo imaging devices (12), processing images captured by said imaging devices (12), detecting objects, and tracking detected objects over several time frames, in the captured images, **characterized by** obtaining an estimated value for the intrinsic yaw error of the imaging devices (12) by solving a set of equations, belonging to one particular detected object (30), using a non-linear equation solver method, where each equation corresponds to one time frame and relates a frame time, a disparity value of the particular detected object, an intrinsic yaw error and a kinematic variable of the ego vehicle,and determining whether a detected object is stationary or near-stationary, and discarding in said yaw error estimation a detected object not being stationary or near-stationary, **characterized by**
using additional information to discriminate tracked objects that are moving so those moving objects are not used for estimating the yaw angle error.

Fig. 1

Fig. 2

Europäisches
Patentamt

European
Patent Office

Office européen
des brevets

# EUROPEAN SEARCH REPORT

Application Number

EP 18 19 6218

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 3 252 712 A1 (AUTOLIV DEV [SE]) 6 December 2017 (2017-12-06) | 1,8-10, 12 | INV. G06T7/80 G06T7/11 |
| Y | * paragraph [0008] - paragraph [0012] * * paragraph [0016] - paragraph [0017] * * claims 1-15 * * figures 6-9 * | 2-7,11 | |
| Y | US 2015/220794 A1 (BABA KOZO [JP] ET AL) 6 August 2015 (2015-08-06) * paragraph [0061] - paragraph [0074] * | 2-7 | |
| A | WO 2012/125687 A2 (UNIV CALIFORNIA [US]; BHANU BIR [US]; THAKOOR NINAD [US]) 20 September 2012 (2012-09-20) * paragraph [0041] - paragraph [0054] * | 1-7,12 | |
| Y | US 2014/093131 A1 (FAN ZHIGANG [US] ET AL) 3 April 2014 (2014-04-03) | 11 | |
| A | * abstract * * paragraphs [0015], [0018], [0020] - paragraph [0022] * | 1-10,12 | |
| Y | US 2016/363647 A1 (ZENG SHUQING [US] ET AL) 15 December 2016 (2016-12-15) | 11 | TECHNICAL FIELDS SEARCHED (IPC) G06T |
| A | * paragraph [0019] - paragraph [0023] * | 1-10,12 | |

The present search report has been drawn up for all claims

| Place of search | Date of completion of the search | Examiner |
|---|---|---|
| Munich | 19 June 2019 | Katsoulas, Dimitrios |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**Application Number**

EP 18 19 6218

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION**
**SHEET B**

Application Number

EP 18 19 6218

The Search Division considers that the present European patent application does not comply with the requirements of unity of invention and relates to several inventions or groups of inventions, namely:

1. claims: 1-7, 12

   A method for determining moving objects. This is done by means of road /lane detection and by discarding objects that lie on the road.
   ---

2. claims: 8-11

   A method for determining static objects. This is done either by training a classifier for this purpose or by using data from external maps which are downloaded.
   ---

**ANNEX TO THE EUROPEAN SEARCH REPORT
ON EUROPEAN PATENT APPLICATION NO.**

EP 18 19 6218

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2019

| Patent document cited in search report | | | Publication date | Patent family member(s) | | | Publication date |
|---|---|---|---|---|---|---|---|
| EP | 3252712 | A1 | 06-12-2017 | CN | 109313813 | A | 05-02-2019 |
| | | | | EP | 3252712 | A1 | 06-12-2017 |
| | | | | WO | 2017207669 | A1 | 07-12-2017 |
| US | 2015220794 | A1 | 06-08-2015 | CN | 104718562 | A | 17-06-2015 |
| | | | | JP | 6052293 | B2 | 27-12-2016 |
| | | | | JP | WO2014061123 | A1 | 05-09-2016 |
| | | | | US | 2015220794 | A1 | 06-08-2015 |
| | | | | WO | 2014061123 | A1 | 24-04-2014 |
| WO | 2012125687 | A2 | 20-09-2012 | BR | 112013023734 | A2 | 13-12-2016 |
| | | | | CN | 103518230 | A | 15-01-2014 |
| | | | | CN | 107092856 | A | 25-08-2017 |
| | | | | EP | 2686841 | A2 | 22-01-2014 |
| | | | | US | 2014037142 | A1 | 06-02-2014 |
| | | | | WO | 2012125687 | A2 | 20-09-2012 |
| US | 2014093131 | A1 | 03-04-2014 | DE | 102013219098 | A1 | 12-06-2014 |
| | | | | JP | 2014071900 | A | 21-04-2014 |
| | | | | KR | 20140043280 | A | 09-04-2014 |
| | | | | US | 2014093131 | A1 | 03-04-2014 |
| US | 2016363647 | A1 | 15-12-2016 | CN | 106256644 | A | 28-12-2016 |
| | | | | DE | 102016210254 | A1 | 15-12-2016 |
| | | | | US | 2016363647 | A1 | 15-12-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3252712 A1